Europäisches Patentamt

(19) European Patent Office

Office européen des brevets

(11) Numéro de publication : **0 453 433 A2**

# (12) DEMANDE DE BREVET EUROPEEN

(21) Numéro de dépôt : 91870063.4

(22) Date de dépôt : 15.04.91

(51) Int. Cl.⁵ : **G01N 21/88, G01B 11/30, G01N 27/00, G01N 29/00, G06F 15/66**

(30) Priorité : 18.04.90 BE 9000429

(43) Date de publication de la demande :
23.10.91 Bulletin 91/43

(84) Etats contractants désignés :
**BE DE ES FR GB IT SE**

(71) Demandeur : **CENTRE DE RECHERCHES METALLURGIQUES CENTRUM VOOR RESEARCH IN DE METALLURGIE Association sans but lucratif Vereniging zonder winstoogmerk Rue Montoyer, 47 B-1040 Bruxelles (BE)**

(72) Inventeur : **Defourny, Jacques
224, rue Voie des Vaux
B-4420 Montegnee (BE)**
Inventeur : **Monfort, Guy
117, rue Neuvice
B-4420 Montegnee (BE)**
Inventeur : **Leroy, Vincent
55/071, quai de Rome
B-4000 Liege (BE)**

(74) Mandataire : **Lacasse, Lucien Emile et al
CENTRE DE RECHERCHES
METALLURGIQUES Abbaye du Val-Benoît 11, rue Ernest Solvay
B-4000 Liège (BE)**

(54) Procédé pour le contrôle automatique de la qualité d'un composant de carrosserie automobile.

(57)     On détermine successivement une forme approchée puis la forme géométrique réelle du composant, et on compare celle-ci à la forme géométrique d'un composant de référence. On mesure les déformations locales du composant, par exemple par un examen optique de sa surface, puis on mesure la rugosité de la surface du composant et on détermine au moins un profil de rugosité de cette surface. On détermine ensuite la santé interne, notamment le degré de porosité, du composant, ainsi que son épaisseur, de préférence par un examen ultrasonore. On compare le résultat de ces mesures à des valeurs de consigne correspondant au composant de référence. On analyse les résultats de cette comparaison et on corrige les écarts éventuels constatés en agissant sur le formage du composant.

EP 0 453 433 A2

La présente invention concerne un procédé pour le contrôle automatique de la qualité d'un composant de carrosserie automobile.

Une carrosserie automobile se compose essentiellement de deux types d'éléments, à savoir les éléments de la robe du véhicule, c'est-à-dire les éléments extérieurs visibles, et les éléments de la structure, qui supportent les éléments de la robe et ne sont en général pas visibles. Les deux types d'éléments de carrosserie sont visés par la présente invention; dans la description qui va suivre, ils seront désignés par le terme générique de composant de carrosserie automobile.

Actuellement, un composant de carrosserie automobile est fabriqué par formage à partir d'une tôle de métal, par exemple d'acier ou d'aluminium, ou d'une feuille de matière synthétique, soit encore par moulage à partir d'une résine synthétique.

Ces composants sont assemblés de manière appropriée pour constituer la carrosserie, et celle-ci doit finalement présenter non seulement la forme voulue, mais également un bel aspect esthétique et une durabilité satisfaisante tout en remplissant correctement sa fonction structurelle.

Chacun des composants doit donc respecter un certain nombre de critères, qui définissent sa qualité au sens de la présente invention. Cette qualité est appréciée par rapport à un composant de référence, considéré comme idéal.

Un premier critère que le composant doit impérativement respecter est la justesse de forme, qui conditionne la bonne intégration du composant dans la structure d'ensemble de la carrosserie ainsi que le déroulement correct des opérations d'assemblage de la carrosserie.

L'aspect esthétique d'un composant est lié aux caractéristiques de sa surface, notamment à sa rugosité, ainsi qu'à la présence de défauts tels que des traces de grippage ou des plis apparaissant lors de l'emboutissage.

Pour que le composant remplisse correctement sa fonction structurelle et contribue ainsi à la sécurité du véhicule, il importe que chacune de ces zones soit parfaitement saine; en particulier, aucune zone du composant ne pourra présenter un défaut de compacité ou une épaisseur insuffisante.

Enfin, la durabilité d'un composant constitue actuellement une caractéristique importante. Cette durabilité est souvent assurée par une couche de protection déposée sur la tôle avant le formage du composant. Il importe que cette couche de protection ne soit pas endommagée ou exagérément amincie au cours du formage du composant.

La qualité d'un composant dépend d'une part de sa conception et de sa mise au point initiales et d'autre part de ses conditions de fabrication.

Lors de la conception et de la mise au point d'un composant, il importe d'évaluer la qualité des prototypes, d'identifier les écarts par rapport à la qualité visée et de réagir sur le processus de fabrication de manière à pallier les déficiences éventuelles observées. Pour répondre aux impératifs d'une mise au point économique, il convient de minimiser le nombre de phases correctives; ceci met en évidence l'intérêt de méthodes fiables et objectives non seulement de mesure mais encore de diagnostic. Une voie attractive à cet égard consiste à coupler ce genre de mesures avec le résultat de simulations numériques, effectuées par exemple par éléments finis.

En fabrication, le problème est d'assurer la constance de la qualité et l'adéquation de celle-ci aux spécifications imposées. Il importe alors de remédier sans retard à toute dérive, d'anticiper celle-ci par une mesure sensible et fiable et d'établir très rapidement le diagnostic et les actions correctrices.

Pour atteindre la qualité recherchée pendant la mise au point et pour maintenir cette qualité pendant la fabrication, il faut mesurer divers paramètres qui traduisent le respect des critères mentionnés plus haut.

Actuellement, le contrôle de la qualité des composants est effectué manuellement. Il peut dès lors comporter un risque d'erreur, soit lors de la mesure proprement dite, soit lors de l'archivage des valeurs mesurées; en outre, l'analyse des résultats peut manquer d'objectivité.

On a donc besoin, dans ce domaine de la technique, d'un procédé qui permette d'opérer un contrôle fiable et objectif de la qualité d'un composant de carrosserie automobile. Ce procédé devra de préférence être automatique et il devra utiliser des méthodes et des moyens de mesure aussi simples que possible.

L'objet de la présente invention est de proposer un procédé de contrôle qui répond à ces conditions, en assurant, de manière objective et reproductible, la mesure des caractéristiques requises du composant, l'archivage des résultats des mesures, ainsi que l'analyse de ces résultats.

Conformément à la présente invention, un procédé pour le contrôle de la qualité d'un composant de carrosserie automobile par rapport à un composant de référence, est caractérisé en ce que, successivement et automatiquement:

1) on détermine la forme géométrique réelle du composant et on la compare à la forme géométrique dudit composant de référence;

2) on mesure les déformations locales du composant;

3) on mesure la rugosité de la surface du composant, et on détermine le profil de rugosité de cette surface suivant au moins une trajectoire tracée sur ladite surface;

4) on détermine la santé interne, et en particulier le degré de porosité du composant;

5) on mesure l'épaisseur du composant en au moins un point;

6) on compare le résultat des mesures obtenues aux points (2) à (5) avec des valeurs de consigne correspondant audit composant de référence.

Une mise en oeuvre particulière du procédé de l'invention comprend les opérations suivantes, effectuées de préférence successivement :

a) établir une forme approchée du composant, consistant à:

a1) positionner ledit composant par rapport à un plan de référence;

a2) choisir une pluralité de points situés dans ledit plan de référence et déterminer les coordonnées (x, y) desdits points suivant deux axes tracés dans ledit plan de référence;

a3) mesurer la position (z) des points de la surface dudit composant qui correspondent auxdits points (x, y), ladite position (z) étant mesurée par rapport audit plan de référence et suivant un troisième axe qui perce le plan de référence (x, y);

a4) déterminer une forme approchée dudit composant à partir des coordonnées (x, y, z) desdits points;

a5) tracer au moins une trajectoire sur ladite forme approchée du composant;

a6) en une série de points situés sur ladite trajectoire, déterminer l'écart entre la position (z) correspondant à ladite forme approchée et la position (z) du point de mêmes coordonnées (x, y) situé sur ledit composant; et

b) corriger ladite forme approchée en annulant lesdits écarts de façon à établir la forme exacte dudit composant.

Cette procédure en deux étapes est nécessaire pour pouvoir aborder et décrire des formes complexes et inconnues a priori.

Dans la pratique, cette procédure est avantageusement appliquée au moyen d'un capteur de déplacement ou de proximité, qui est de préférence manipulé par un robot ou un autre manipulateur automatique.

Le capteur peut également être constitué par un système de mesure sans contact associé à un logiciel de traitement d'image.

Cette série d'opérations permet de contrôler la justesse de forme du composant considéré, en tenant compte des tolérances de fabrication.

Selon une caractéristique particulière du procédé de l'invention, la mesure des déformations locales du composant comprend un examen optique de la surface du composant, la formation d'une image de cette surface, une analyse de l'image ainsi formée et sa comparaison avec l'image de la surface d'un composant de référence.

Dans la pratique, cette opération est avantageusement effectuée au moyen d'une caméra vidéo, qui est de préférence également manipulée par un robot ou un autre manipulateur automatique. Suivant une réalisation avantageuse, on positionne ladite caméra vidéo à une distance correcte du composant grâce aux résultats fournis par l'analyse de la justesse de forme du composant.

Selon une méthode connue en soi, applicable en particulier à un composant obtenu par emboutissage, on imprime sur la tôle, avant le formage, un réseau de grilles dont on mesure ensuite les déformations, après le formage. La mesure de ces déformations permet de calculer les déformations locales en tout point du composant, non seulement suivant des directions de la surface, en particulier les directions principales de cette surface, mais également suivant l'épaisseur du composant.

Dans le cadre de la mesure des déformations locales, l'examen optique de la surface du composant permet également de détecter la présence éventuelle de plis ou de tous autres défauts visuels macroscopiques, qui se forment lors de l'emboutissage par suite d'un guidage incorrect de la tôle.

Suivant une autre caractéristique du procédé de l'invention, on mesure la rugosité de la surface du composant au moyen d'un faisceau laser focalisé sur ladite surface, on balaye ladite surface suivant au moins une trajectoire au moyen dudit faisceau laser focalisé, on trace le profil de rugosité de la surface suivant ladite trajectoire et on détermine la composante dudit profil correspondant à au moins une gamme prédéterminée de longueurs d'onde de la rugosité.

D'une manière générale, on peut cependant utiliser d'autres types de rugosimètres, avec ou sans contact, que le rugosimètre à laser précité, à la condition d'adapter les autres opérations de manière appropriée. Ici également, le rugosimètre est avantageusement positionné à une distance correcte du composant grâce aux résultats fournis par l'analyse de la justesse de forme du composant.

L'analyse dudit profil de rugosité permet en particulier de déterminer deux composantes de ce profil, correspondant respectivement à une longueur d'onde faible, par exemple inférieure à 1 mm, qui exprime la rugosité proprement dite de la surface du composant, et à une longueur d'onde moyenne qui traduit l'ondulation de la surface du composant.

Pour respecter le critère de l'aspect esthétique, c'est-à-dire assurer au composant une bonne netteté d'image après peinture, on considère actuellement que la rugosité doit pouvoir être masquée par le film de peinture et que l'ondulation doit être suffisamment faible pour que la tôle peinte se comporte comme un miroir plan.

L'analyse de l'image de la surface du composant, c'est-à-dire de la tôle déformée, permet également de vérifier si l'opération de formage n'altère pas outre mesure la qualité de la surface et ne dégrade pas l'aspect après peinture du composant.

Par ailleurs, la technique précitée, basée sur l'emploi d'un rugosimètre, permet de déceler la présence de traces de grippage à la surface du composant, notamment en des endroits considérés comme critiques. On sait que le grippage est dû à l'arrachement de particules métalliques de la tôle sous l'effet du frottement provoqué par l'emboutissage et à l'accumulation de ces particules microscopiques en amas macroscopiques sur l'outillage; ces amas provoquant alors des griffes sur le composant.

Le rugosimètre peut détecter très tôt l'apparition de ces griffes et permet ainsi de corriger l'outillage avant que les composants ne soient endommagés de manière grave.

Grâce à cette mesure de la rugosité, il est aussi possible de recenser les endroits où le grippage se produit et de suivre l'évolution de ce phénomène pendant une succession d'opérations d'emboutissage.

Selon une caractéristique supplémentaire du procédé de l'invention, on soumet ledit composant à un examen ultrasonore, en au moins un point, et de préférence suivant au moins une trajectoire tracée sur sa surface.

Cet examen permet notamment de suivre l'évolution de la santé interne du composant, en particulier son degré de porosité ou, inversément, sa compacité, ainsi que d'évaluer l'évolution de l'épaisseur du composant.

Un tel examen est particulièrement intéressant dans le cas des composants moulés, tant en résine synthétique qu'en alliage métallique. En effet, ces composants peuvent présenter des défauts internes, comme des bulles ou des inclusions, qui apparaissent lors du moulage; de plus, il n'est pas possible d'apprécier leurs déformations locales par un examen optique faisant appel par exemple à un réseau de grilles.

Dans la pratique, on effectue cette mesure au moyen d'un palpeur à ultrasons, que l'on positionne avantageusement à une distance correcte du composant grâce aux résultats fournis par l'analyse de la justesse de forme dudit composant.

Selon une autre variante, on emploie un capteur à courants de Foucault, qui permet de quantifier localement l'état d'une couche protectrice superficielle, en particulier l'épaisseur de celle-ci.

Selon une mise en oeuvre particulièrement intéressante du procédé de l'invention, on dispose les différents appareils de mesure en position de repos dans un endroit prédéterminé, par exemple un ratelier, on prélève successivement lesdits appareils de mesure pour les amener dans leur position de mesure et effectuer la mesure correspondante et on les replace ensuite successivement dans ladite position de repos, on enregistre les résultats des différentes mesures successives et on les compare aux valeurs correspondantes d'un composant de référence.

Pour assurer cette mise en oeuvre, on peut utiliser un système automatique tel qu'un robot, par exemple un robot anthropomorphe.

La commande de ce système automatique peut être confiée à un ordinateur ou à un automate programmable, qui peut en outre assurer l'enregistrement, l'utilisation et l'archivage des résultats des mesures. En particulier, l'ordinateur peut commander l'interruption de la séquence opératoire lorsqu'il constate que l'un des critères précités n'est pas respecté.

Toujours dans le cadre de cette mise en oeuvre, il peut être prévu d'analyser les résultats de la comparaison du composant avec un composant de référence, de poser un diagnostic portant sur les causes des écarts éventuels constatés et de proposer des actions correctrices pour réduire ou annuler ces écarts. L'exécution de ces tâches peut être confiée à un système expert implanté dans l'ordinateur de commande du robot ou dans un ordinateur séparé. Ce système peut être constitué par un programme d'ordinateur approprié, algorithmique ou non.

## Revendications

1. Procédé pour le contrôle de la qualité d'un composant de carrosserie automobile par rapport à un composant de référence, caractérisé en ce que, successivement et automatiquement :

   1) on détermine la forme géométrique réelle du composant et on la compare à la forme géométrique dudit composant de référence;

   2) on mesure les déformations locales du composant;

   3) on mesure la rugosité de la surface du composant, et on détermine le profil de rugosité de cette surface suivant au moins une trajectoire tracée sur ladite surface;

   4) on détermine la santé interne, et en particulier le degré de porosité du composant;

   5) on mesure l'épaisseur du composant en au moins un point;

   6) on compare le résultat des mesures obtenues aux points (2) à (5) avec des valeurs de consigne correspondant audit composant de référence.

2. Procédé de contrôle suivant la revendication 1, caractérisé en ce que, pour déterminer la forme géométrique réelle dudit composant :

   a) on établit une forme approchée du composant, opération pour laquelle:

      a1) on positionne ledit composant par rapport à un plan de référence;

      a2) on choisit une pluralité de points situés dans ledit plan de référence et on détermine les coordonnées (x, y) desdits points suivant deux axes tracés dans ledit plan de référence;

      a3) on mesure la position (z) des points de la surface dudit composant qui correspondent auxdits points (x, y), ladite position (z) étant mesurée par rapport audit plan de référence et suivant un troisième axe qui perce le plan de référence (x, y);

a4) on détermine une forme approchée dudit composant à partir des coordonnées (x, y, z) desdits points;

a5) on trace au moins une trajectoire sur ladite forme approchée du composant;

a6) en une série de points situés sur ladite trajectoire, on détermine l'écart entre la position (z) correspondant à ladite forme approchée et la position (z) du point de mêmes coordonnées (x, y) situé sur ledit composant; et

b) on corrige ladite forme approchée en annulant lesdits écarts de façon à établir la forme exacte dudit composant.

3. Procédé de contrôle suivant l'une ou l'autre des revendications 1 et 2, caractérisé en ce que la mesure des déformations locales du composant comprend un examen optique de la surface du composant, la formation d'une image de cette surface, et l'analyse de l'image ainsi formée.

4. Procédé de contrôle suivant la revendication 3, caractérisé en ce que, dans le cas d'un composant formé par emboutissage d'une tôle, on mesure les déformations d'un réseau de grilles imprimé sur la tôle avant le formage, et en ce que l'on en déduit les déformations locales du composant suivant au moins une direction de sa surface et/ou suivant son épaisseur.

5. Procédé de contrôle suivant l'une ou l'autre des revendications 1 à 4, caractérisé en ce que, pour mesurer la rugosité de la surface du composant, on focalise un faisceau laser sur ladite surface, on balaye ladite surface suivant au moins une trajectoire au moyen dudit faisceau laser focalisé, on trace le profil de rugosité de la surface suivant ladite trajectoire, et on détermine la composante dudit profil correspondant à au moins une gamme prédéterminée de longueurs d'onde de la rugosité.

6. Procédé de contrôle suivant l'une ou l'autre des revendications 1 à 5, caractérisé en ce que l'on soumet ledit composant à un examen ultrasonore en au moins un point, et de préférence suivant au moins une trajectoire tracée sur sa surface, afin de déterminer la santé interne du composant et en particulier son degré de porosité.

7. Procédé de contrôle suivant l'une ou l'autre des revendications 1 à 5, caractérisé en ce que l'on soumet ledit composant à un examen par des courants de Foucault en au moins un point, et de préférence suivant au moins une trajectoire tracée sur sa surface, afin de déterminer l'état des couches superficielles, et notamment des couches de protection, du composant.

8. Procédé de contrôle suivant l'une ou l'autre des revendications 1 à 7, caractérisé en ce que l'on dispose les différents appareils de mesure en position de repos dans un endroit prédéterminé, en ce que l'on prélève successivement lesdits appareils de mesure pour les amener dans leur position de mesure, en ce que l'on effectue les mesures correspondantes, en ce que l'on replace ensuite lesdits appareils de mesure successivement dans ladite position de repos, en ce que l'on enregistre les résultats des différentes mesures successives et en ce que l'on compare ces résultats aux valeurs correspondantes d'un composant de référence.

9. Procédé de contrôle suivant la revendication 8, caractérisé en ce que l'on utilise un système automatique, en particulier un robot éventuellement piloté par un ordinateur, pour effectuer au moins une des opérations de manipulation des appareils de mesure, de prise des mesures et d'enregistrement, d'utilisation et d'archivage des résultats des mesures.

10. Procédé de contrôle suivant l'une ou l'autre des revendications 1 à 9, caractérisé en ce que l'on analyse les résultats de la comparaison entre le composant réel et le composant de référence, en ce que l'on pose un diagnostic portant sur les causes des écarts éventuels constatés et en ce que l'on propose des actions correctrices pour réduire ou annuler ces écarts.